# EUROPÄISCHE PATENTSCHRIFT

(11) **EP 1 225 103 B1**
(45) Veröffentlichungstag und Bekanntmachung des Hinweises auf die Patenterteilung: **24.11.2004**
(21) Anmeldenummer: 01130401.1
(22) Anmeldetag: 20.12.2001
(51) Int. Cl.: B60R 21/26

(54) **Gasgenerator, Verfahren zu seiner Herstellung und dessen Verwendung**
Gas generator, method of producing the same and the use thereof
Générateur de gaz, sa méthode de fabrication et sa utilisation

(30) Priorität: 17.01.2001 DE 10101850
(43) Veröffentlichungstag der Anmeldung: 24.07.2002
(73) Patentinhaber: Fraunhofer-Gesellschaft zur Förderung der angewandten Forschung e.V., 80686 München (DE)
(72) Erfinder: Niehaus, Michael, Dr. Dipl.-Chem., 76327 Pfinztal (DE); Popp, Hermann, 76149 Karlsruhe (DE)

(56) Entgegenhaltungen:
- EP-A- 0 480 085
- EP-A- 0 692 411
- EP-A- 0 728 630
- US-A- 4 220 087

## Beschreibung

Die Erfindung betrifft ein Verfahren zur Herstellung eines strangförmigen Gasgenerators mit einer schlauchförmigen Hülle, einer an deren Innenseite angeordneten Beschichtung aus einem festen Anzündmittel, wenigstens einem einen Treibsatz aufweisenden Kern und zumindest einem zwischen Hülle und Kern angeordneten durchgehenden Gaskanal, einen solchen Gasgenerator sowie dessen Verwendung.

Derartige Gasgeneratoren sind bekannt und zeichnen sich durch hohe Abbrandgeschwindigkeiten aus. Mit einer Zündpille od.dgl. wird eine den Gaskanal durchlaufende Stoßwelle erzeugt. Durch die Stoßwelle wird der Treibsatzkern gezündet, der das gewünschte Gas liefert. Die auf der Innenseite der Hülle angeordnete Beschichtung mit dem Anzündmittel dient zur Aufrechterhaltung der Stoßwelle und damit der Reaktion des Treibsatzes und gewährleistet einen vollständigen Abbrand desselben. Die den Kern umgebende Hülle verhindert beim Zünden des Treibsatzes jede nennenswerte Einwirkung der im Innern des Gasgenerators laufenden Druckwelle auf die Umgebung. Sie schützt den Gasgenerator ferner vor äußeren Einflüssen.

Die DE-PS 1 771 851 beschreibt einen Gasgenerator in Form einer Zündschnur mit einer schlauchförmigen Hülle, deren Innenseite unter Freilassen von durchgehenden Gaskanälen mit Explosivstoffen, z. B. Pentyl (PETN), Hexogen (RDX), Oktogen (HMX), 2,4,6-Trinitrotoluol (TNT), Tetryl oder dergleichen, beschichtet ist. Die Hülle besteht insbesondere aus elastomeren Kunststoffen und kann zum Erzielen einer großen Oberfläche innenseitig profiliert ausgebildet sein, um mehrere oder verschieden geformte Gaskanäle zu erhalten, welche die Hülle in Längsrichtung durchsetzen.

Die Hülle kann innenseitig mit flüssigen Explosivstoffen benetzt werden. Statt dessen kann sie auch mit festen Explosivstoffen beschichtet werden, indem ein feinkörniger Explosivstoff durch die Gaskanäle der Hülle hindurchgeführt wird, wobei aufgrund von Adhäsionskräften eine an dem Hüllenmaterial anhaftende dünne Schicht des Explosivstoffs zurückbleibt. Um eine bessere Haftung des partikulären Explosivstoffs an der Hülle zu erzielen, kann letzere zuvor z. B. mit Vaseline innenseitig gefettet werden.

Der US 4 220 087 A ist ein gattungsgemäßer Gasgenerator in Form einer Zündschnur entnehmbar. Er weist eine schlauchförmige Hülle aus Kunststoff, Metall oder Keramik auf, die mit Verstärkungsfasern versetzt sein kann. Im Innern der Hülle ist ein Kern aus einem oder mehreren Treibsätzen unter Freilassen durchgängiger Gaskanäle angeordnet. Die Treibsätze bestehen aus einer nicht detonierenden Mischung aus partikulären Treib- und Explosivstoffen, Oxidatoren und einem Binder. Die Mischung ist auf koaxial zu der Hülle angeordnete Haltestränge aus Metall, Glasfaser oder Kunststoff aufextrudiert. Die Innenseite der Hülle ist mit einem Anzündmittel beschichtet, welches aus denselben Materialien wie die Treibsätze bestehen kann, vorzugsweise aber weniger oder keinen Binder enthält. Die Beschichtung kann ferner zwischen 10 und 90 Mass.-% eines als Anzündmittel dienenden Explosivstoffs enthalten.

Die nachveröffentlichte WO 01/08937 A1 beschreibt ebenfalls einen gattungsgemäßen Gasgenerator, bei welchem auf die Innenseite der Hülle ein Anzündmittel in Form einer pyrotechnischen Mischung aufgebracht ist, wobei die Anzündmischung entweder trocken oder als antrocknender Schlamm aufgebracht ist.

Zum Beschichten des Kerns mit dem Anzündmittel ist vorgesehen, es unter Zusatz von Bindern, wie Silicagel, auf den Kern aufzubringen. In gleicher Weise kann das Anzündmittel auf die Innenseite der Hülle aufgebracht und der Kern anschließend in die Hülle eingeführt werden.

Nachteilig bei den bekannten Verfahren ist grundsätzlich die Art der innenseitigen Beschichtung der Hülle mit dem partikelförmigen Anzündmittel, da die Parameter der Beschichtung, wie Schichtdicke, Porosität etc., nicht zerstörungsfrei untersucht werden können. Dies erschwert insbesondere die bei automatisierten industriellen Verfahren zur Massenherstellung geforderte Qualitätssicherung. Weiterhin können lokal auftretende Inhomogenitäten der Beschichtung nicht oder nur mit erhöhtem Aufwand korrigiert werden, was zu nicht tolerierbarem Ausschuß führt. Wird das Anzündmittel zum Aufbringen auf die Innenseite der Hülle in Bindeund/oder Lösungsmittel eindispergiert, so besteht zusätzlich die Gefahr einer unkontrollierbaren Beeinflussung des Zünd- und Abbrandverhaltens der Beschichtung bzw. einer Beeinträchtigung ihrer Matrix. Dies gilt insbesondere für Zünd- bzw. Treibmittelmischungen, wie Komposit-Treibmittel. Bei nach Art von Haftmitteln wirkenden Bindern ergibt sich ferner ein Nachteil daraus, daß nicht nur an der inneren Mantelfläche der Hülle eine erhöhte Haftung erzielt wird, sondern es kommt auch zum Anhaften und Verklumpen der Anzündmittelpartikel untereinander. Hieraus resultiert einerseits ein erhöhter Bedarf an Bindemittel, andererseits eine unerwünschte Beeinflussung der Zünd- und Abbrandeigenschaften.

Schließlich ist es bekannt, den einen Treibsatz aufweisenden Kern eines Gasgenerators mit einer Kunststoffolie zu umhüllen, welche mit einer dünnen Lage eines Anzündmittels in Form einer Magnesiumschicht oder einem Folienmaterial aus einem andersartigen Metall beschichtet ist (EP 0 692 411 A2). Indes weist eine solche Folienlage gegenüber einem partikelförmigen Anzündmittel eine verminderte Wirksamkeit auf, da seine Oberfläche demgegenüber sehr klein ist. Alternativ sieht die EP 0 692 411 A2 vor, den Kern des Gasgenerators mit einer zentralen Axialbohrung auszubilden, in welche eine aus Folie gebildete Tasche eingebracht wird, die mit einem partikelförmigen Anzündmittel befüllt wird. In diesem Fall besteht wiederum die Gefahr von lokalen Inhomogenitäten des Anzündmittels nach Einfüllen in die Folientasche. Zudem ist das Anzündmittel durch die abgedichtete Folie von dem den Treibsatz aufweisenden Kern getrennt.

Der Erfindung liegt die Aufgabe zugrunde, ein einfaches und kostengünstiges Verfahren zur Herstellung von Gasgeneratoren der eingangs genannten Art vorzuschlagen, welches die vorgenannten Nachteile sicher und zuverlässig vermeidet. Sie ist ferner auf einen solchen Gasgenerator sowie auf dessen Verwendung gerichtet.

Der verfahrenstechnische Teil dieser Aufgabe wird erfindungsgemäß mit einem Verfahren der eingangs genannten Art gelöst, welches durch folgende Schritte gekennzeichnet ist:
- haftendes Aufbringen des partikelförmigen Anzündmittels auf eine Folienbahn;
- Umhüllen des Kerns mit der mit dem partikelförmigen Anzündmittel beschichteten Folienbahn unter Bildung eines den Kern umschließenden und die Gaskanäle bildenden Hohlzylinders derart, daß die mit dem Anzündmittel beschichtete Seite der Folienbahn die dem Kern zugewandte Innenseite des Hohlzylinders bildet;
- Verbinden der beiden Längsrichtung der Folienbahn zu dem geschlossenen Hohlzylinder;
- Anordnen des von der Folienbahn mit dem innenseitig aufgebrachten partikelförmigen Anzündmittel gebildeten, den Kern enthaltenden Hohlzylinders in der Hülle.

Das erfindungsgemäße Verfahren ermöglicht das Aufbringen des partikelförmigen Anzündmittels auf die z. B. im wesentlichen planare Folienbahn und macht die Beschichtung somit nach Aufbringen derselben für beliebige zerstörungsfreie Untersuchungsmethoden, z. B. IR-Schichtdickenmessung etc., zugänglich. Auf diese Weise können gegebenenfalls auftretende Qualitätsmängel sicher erkannt und vor Fertigstellen des Gasgenerators ohne Anfallen von Ausschußprodukten behoben werden. Die Vermeidung von Ausschuß ist insbesondere im Hinblick auf die Toxizität der meisten herkömmlichen Treibund Explosivstoffe und die damit verbundene Entsorgungsproblematik von großem Interesse. Die Erfindung macht ferner den Einsatz von Binde- oder Lösungsmitteln zum Aufbringen des Anzündmittels entbehrlich und vermeidet somit jegliche Beeinträchtigung des Zünd- und Abbrandverhaltens der Beschichtung.

In bevorzugter Ausführung ist zur Erhöhung der Adhäsionskräfte zwischen der Folienbahn und dem partikelförmigen Anzündmittel vorgesehen, daß die Folienbahn vor Aufbringen des Anzündmittels mit einem Klebstoffilm versehen wird. Alternativ kann zum gleichen Zweck insbesondere auch eine Klebefolie eingesetzt werden. Im letztgenannten Fall kann das Anzündmittel mit Vorteil unter Aussparung eines als Klebefalz dienenden Längsrandes der Folienbahn auf diese aufgebracht werden, wobei der Klebefalz zum anschließenden Verbinden der in Längsrichtung des Hohlzylinders angeordneten Ränder der Folienbahn nach Umhüllen des Kerns mit der beschichteten Folienbahn dient. Selbstverständlich kann das Anzündmittel auch ohne den Einsatz von Klebern auf die Folienbahn aufgebracht werden, wobei in diesem Fall die vornehmlich auf van-der-Waals-Kräften beruhenden Adhäsionskräfte zwischen dem Anzündmittel und dem Folienmaterial z. B. durch statische Aufladung der Folienbahn erhöht werden können.

Der Kern des Gasgenerators kann beispielsweise mittels einer Ziehform mit der mit dem Anzündmittel beschichteten Folienbahn umhüllt werden, wobei die Längsränder der Folienbahn, wie bereits angedeutet, gleichzeitig oder anschließend vorzugsweise miteinander verklebt werden.

Zum Anordnen des von der Folienbahn gebildeten, den Kern enthaltenden Hohlzylinders in der Hülle kann dieser z. B. in die vorgefertigte schlauchförmige Hülle eingeführt und zumindest endseitig mit dieser verbunden, insbesondere verklebt werden. Sofern die Hülle vornehmlich aus einem thermoplastischen oder thermoelastischen Kunststoff besteht, kann sie alternativ auch auf den von der Folienbahn gebildeten Hohlzylinder mit dem Kern aufextrudiert werden.

Ferner ist es möglich, daß der von der Folienbahn gebildete Hohlzylinder mit dem Kern mit einer die Hülle des Gasgenerators bildenden Lage aus einem nachgiebigen Material umhüllt wird und die beiden Längsränder der Lage miteinander verbunden werden.

Um eine glatte Außen- und insbesondere Innenfläche der schlauchförmigen Hülle zu gewährleisten, werden in diesem Fall bevorzugt die beiden Längsränder der die Hülle des Gasgenerators bildenden Lage stoßseitig miteinander verbunden, wobei die Längsränder der Lage vorzugsweise miteinander verklebt werden, was z. B. mittels Reaktionsklebern oder dergleichen geschehen kann.

Die Erfindung betrifft auch einen Gasgenerator mit einer schlauchförmigen Hülle, einer an deren Innenseite angeordneten Beschichtung aus einem festen Anzündmittel, wenigstens einem einen Treibsatz aufweisenden Kern und zumindest einem zwischen Hülle und Kern angeordneten durchgehenden Gaskanal, welcher durch eine innenseitig an der Hülle angeordnete Folienbahn, auf deren dem Kern zugewandten Seite die Beschichtung aus dem partikelförmigen Anzündmittel aufgebracht ist, gekennzeichnet ist. Das Anzündmittel ist hierbei mit Vorzug mittels eines Klebstoffilms auf die z. B. als Klebefolie ausgebildete Folienbahn aufgebracht.

Der mittels eines der vorstehend beschriebenen Verfahren hergestellte Gasgenerator ist einerseits zum Einsatz als Zündschnur geeignet, wobei er auf beliebige bekannte Weise, z. B. elektrisch, mittels Zünd- oder Sprengkapseln etc., ausgelöst werden kann. Er ist aufgrund seiner geringen Empfindlichkeit gegen äußere Einwirkungen, seines sicheren und gleichmäßigen Abbrandes infolge einer ständigen Kontrollierbarkeit der Qualität der Anzündmittelbeschichtung während seiner Herstellung und der geringen Einwirkung der im Innern des Gasgenerators verlaufenden Druckwelle nach Zünden desselben auf die Umgebung insbesondere auch als Gaserzeuger für Airbags geeignet.

Nachstehend ist die Erfindung anhand eines Ausführungsbeispiels unter Bezugnahme auf die Zeichnung näher erläutert. In der Zeichnung zeigen:
- Fig. 1-: 4 schematische Ansichten einer Ausführungsform eines Gasgenerators zu verschiedenen Herstellungsstadien und
- Fig. 5: eine Schnittansicht A-A, B-B des Gasgenerators gemäß Fig. 4.

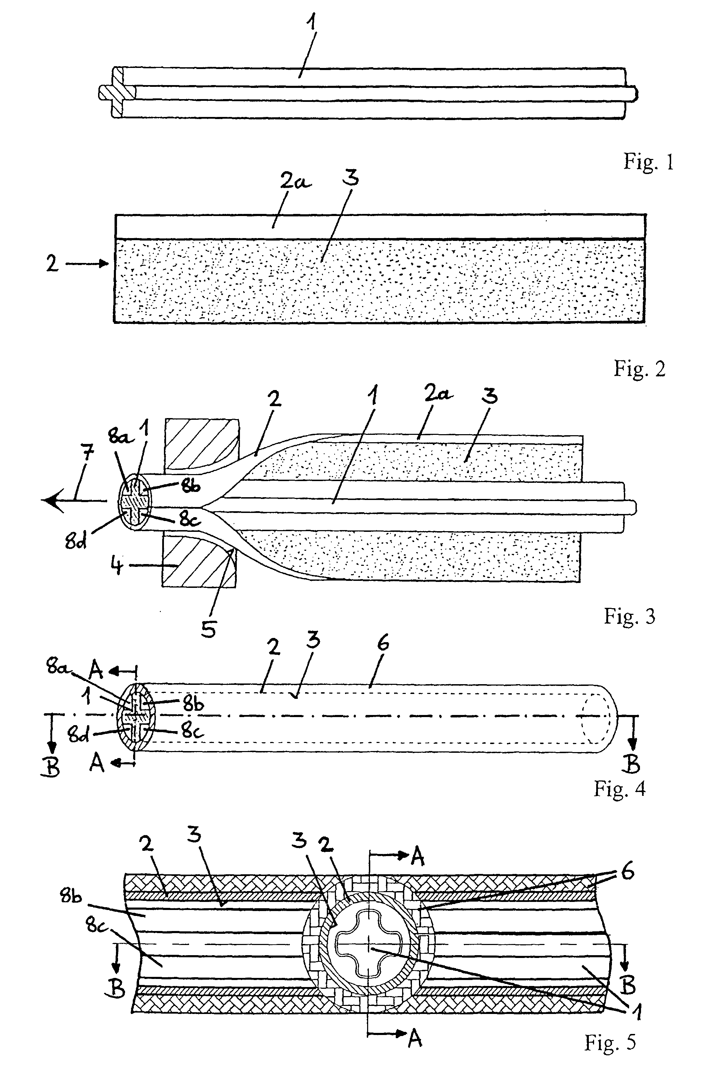

Fig. 1 zeigt einen aus einem Treibsatz bestehenden oder einen solchen enthaltenden Kern 1 eines in Fig. 1 nicht dargestellten Gasgenerators. Der Kern 1 weist im vorliegenden Ausführungsbeispiel einen etwa kreuzförmigen Querschnitt auf.

Fig. 2 ist eine mit einem Klebstoffilm beschichtete Folienbahn 2 entnehmbar, auf die unter Aussparen eines als Klebefalz dienenden Längsrandes 2a eine Beschichtung 3 eines feinpartikulären Anzündmittels aufgebracht ist.

Fig. 3 zeigt die Umhüllung des Kerns 1 (Fig. 1) mit der beschichteten Folienbahn 2 (Fig. 2) unter Bildung eines den Kern aufnehmenden Hohlzylinders mittels einer etwa ringförmigen Ziehform 4, die einen sich stetig erweiternden Innenquerschnitt 5 aufweist.

In Fig. 4 ist der fertige Gasgenerator nach Anordnen des von der beschichteten Folienbahn 2 gebildeten Hohlzylinders in einer Hülle 6 dargestellt. Der strangförmige Gasgenerator gemäß Fig. 4 ist in der Fig. 5 nochmals im Querschnitt A-A und Längsschnitt B-B gezeigt.

Zur Herstellung des Gasgenerators wird auf die Folienbahn 2 (Fig. 2) zunächst ein dünner Klebstoffilm aufgetragen und die Folienbahn 2 sodann mit dem partikelförmigen Anzündmittel beschichtet, wobei eine im wesentlichen planare Anordnung der Folienbahn 2 eine gleichmäßige Beschichtung 3 derselben ermöglicht. Die Schichtdicke der Beschichtung 3 ist mittels beliebiger zerstörungsfreier Untersuchungsmethoden kontrollierbar. Für die Folienbahn 2 kann beispielsweise eine unter dem Handelsnamen Nomex® erhältliche Kunststoffolie eingesetzt werden, die vornehmlich aus m-Phenylendiamin und Isophthalsäure besteht und eine hohe thermische Beständigkeit bis etwa 370°C aufweist. Wie aus der Fig. 2 ersichtlich, wird beim Aufbringen des Anzündmittels zweckmäßig ein Längsrand 2a der Folienbahn 2 ausgespart, der als Klebefalz zum späteren Verkleben der Folienränder dient.

Um den Kern 1 (Fig. 1) mit der beschichteten Folienbahn 2 zu umhüllen, wird der Kern 1 auf die mit dem Anzündmittel beschichtete Seite der Folienbahn 2 aufgelegt und in Richtung Pfeil 7 durch die Ziehform 4 (Fig. 3) geführt, wobei die Längsränder der Folienbahn 2 an dem Klebefalz unter Bildung eines den Kern 1 aufnehmenden Hohlzylinders miteinander verbunden werden. Hierbei werden beim Einsatz eines Kerns 1 mit kreuzförmigem Querschnitt vier durchgehende Gaskanäle 8a, 8b, 8c, 8d gebildet. Alternativ kann der Kern 1 auch auf beliebige andere Weise mit der Folienbahn 2 umhüllt oder umwickelt werden, z. B. mittels einer nach Art einer Vorrichtung zum Drehen von Zigaretten arbeitenden Vorrichtung mit beabstandet angeordneten Walzen (nicht dargestellt).

Der von der Folienbahn 2 gebildete, den Kern 1 aufnehmende Hohlzylinder wird sodann in die z. B. vorgefertigte schlauchförmige Hülle 6 einführt (Fig. 4) und zumindest endseitig mit dieser verbunden, insbesondere verklebt. Alternativ kann die Hülle 6 auch auf den von der Folienbahn 2 gebildeten Hohlzylinder mit dem Kern 1 aufextrudiert werden, oder der von der Folienbahn 2 gebildete Hohlzylinder mit dem Kern 1 wird mit einer die Hülle 6 des Gasgenerators bildenden Lage aus einem nachgiebigen Material umhüllt (nicht gezeigt) und die Längsränder der Lage werden miteinander verbunden, insbesondere stoßseitig miteinander verklebt.

Im Falle des Einsatzes einer die Hülle 6 des Gasgenerators bildenden Lage aus einem flexiblen Material kann diese auch unmittelbar mit dem Zündmittel beschichtet und der Kern 1 mit der beschichteten Lage umhüllt werden.

## Patentansprüche

1. Verfahren zur Herstellung eines strangförmigen Gasgenerators mit einer schlauchförmigen Hülle (6), einer innenseitig angeordneten Beschichtung (3) aus einem festen Anzündmittel, wenigstens einem einen Treibsatz aufweisenden Kern (1) und zumindest einem zwischen Hülle (6) und Kern (1) angeordneten durchgehenden Gaskanal (8a, 8b, 8c, 8d), **gekennzeichnet durch** folgende Schritte:
- haftendes Aufbringen des partikelförmigen Anzündmittels auf eine Folienbahn (2);
- Umhüllen des Kerns (1) mit der mit dem partikelförmigen Anzündmittel beschichteten Folienbahn (2) unter Bildung eines den Kern (1) umschließenden und die Gaskanäle (8a, 8b, 8c, 8d) bildenden Hohlzylinders derart, daß die mit dem Anzündmittel beschichtete Seite der Folienbahn (2) die dem Kern (1) zugewandte Innenseite des Hohlzylinders bildet;
- Verbinden der beiden Längsränder der Folienbahn (2) zu dem geschlossenen Hohlzylinder;
- Anordnen des von der Folienbahn (2) mit dem innenseitig aufgebrachten partikelförmigen Anzündmittel gebildeten, den Kern (1) enthaltenden Hohlzylinders in der Hülle (6).

2. Verfahren nach Anspruch 1, **dadurch gekennzeichnet, daß** die Folienbahn (2) vor Aufbringen des Anzündmittels mit einer Haftschicht für das Anzündmittel versehen wird.

3. Verfahren nach Anspruch 1, **dadurch gekennzeichnet, daß** eine Klebefolie eingesetzt wird.

4. Verfahren nach einem der Ansprüche 1 bis 3, **dadurch gekennzeichnet, daß** der Kern (1) mittels einer Ziehform (4) mit der mit dem Anzündmittel beschichteten Folienbahn (2) umhüllt wird.

5. Verfahren nach einem der Ansprüche 1 bis 4, **dadurch gekennzeichnet, daß** die Längsränder der Folienbahn (2) miteinander verklebt werden.

6. Verfahren nach einem der Ansprüche 1 bis 5, **dadurch gekennzeichnet, daß** der von der Folienbahn (2) gebildete Hohlzylinder mit dem Kern (1) in die schlauchförmige Hülle (6) eingeführt und zumindest endseitig mit dieser verbunden wird.

7. Verfahren nach Anspruch 6, **dadurch gekennzeichnet, daß** der von der Folienbahn (2) gebildete Hohlzylinder mit dem Kern (1) zumindest endseitig mit der schlauchförmigen Hülle (6) verklebt wird.

8. Verfahren nach einem der Ansprüche 1 bis 5, **dadurch gekennzeichnet, daß** die Hülle (6) auf den von der Folienbahn (2) gebildeten Hohlzylinder mit dem Kern (1) aufextrudiert wird.

9. Verfahren nach einem der Ansprüche 1 bis 5, **dadurch gekennzeichnet, daß** der von der Folienbahn (2) gebildete Hohlzylinder mit dem Kern (1) mit einer die Hülle (6) des Gasgenerators bildenden Lage aus einem nachgiebigen Material umhüllt wird und die beiden Längsränder der Lage miteinander verbunden werden.

10. Verfahren nach Anspruch 9, **dadurch gekennzeichnet, daß** die beiden Längsränder der die Hülle (6) des Gasgenerators bildenden Lage stoßseitig miteinander verbunden werden.

11. Verfahren nach Anspruch 9 oder 10, **dadurch gekennzeichnet, daß** die Längsränder der Lage miteinander verklebt werden.

12. Gasgenerator mit einer schlauchförmigen Hülle (6), einer an deren Innenseite angeordneten Beschichtung (3) aus einem festen Anzündmittel, wenigstens einem einen Treibsatz aufweisenden Kern (1) und zumindest einem zwischen Hülle (6) und Kern (1) angeordneten durchgehenden Gaskanal (8a, 8b, 8c, 8d), **gekennzeichnet durch** eine innenseitig an der Hülle (6) angeordnete Folienbahn (2), auf deren dem Kern (1) zugewandten Seite die Beschichtung (3) aus dem partikelförmigen Anzündmittel haftend aufgebracht ist.

13. Gasgenerator nach Anspruch 12, **dadurch gekennzeichnet, daß** das Anzündmittel mittels eines Klebstoffilms auf die Folienbahn (2) aufgebracht ist.

14. Verwendung eines mittels eines Verfahrens nach einem der Ansprüche 1 bis 11 hergestellten Gasgenerators als Zündschnur.

15. Verwendung eines mittels eines Verfahrens nach einem der Ansprüche 1 bis 11 hergestellten Gasgenerators für Airbags.

## Claims

1. Method of producing a strand-like gas generator with a tube-like sheath (6), a coating (3) composed of a solid ignition agent arranged on the inside, at least one core (1) having a propellant charge and at least one continuous gas duct (8a, 8b, 8c, 8d) arranged between the sheath (6) and the core (1), **characterised by** the following steps:
• adherent application of the particulate ignition agent onto a foil sheet (2);
• enveloping the core (1) with the foil sheet (2) coated with the particulate ignition agent to form a hollow cylinder, which encloses the core (1) and forms the gas ducts (8a, 8b, 8c, 8d) in such a manner that the side of the foil sheet (2) coated with the ignition agent forms the inside of the hollow cylinder facing the core (1);
• connection of the two longitudinal edges of the foil sheet (2) to the closed hollow cylinder;
• arranging the hollow cylinder that is formed by the foil sheet (2) with the particulate ignition agent applied on the inside and contains the core (1) in the sheath (6).

2. Method according to Claim 1, **characterised in that** prior to application of the ignition agent, the foil sheet (2) is provided with an adhesive layer for the ignition agent.

3. Method according to Claim 1, **characterised in that** an adhesive foil is used.

4. Method according to one of Claims 1 to 3, **characterised in that** the core (1) is enveloped by the foil sheet (2) coated with the ignition agent by means of a draw die (4).

5. Method according to one of Claims 1 to 4, **characterised in that** the longitudinal edges of the foil sheet (2) are glued to one another.

6. Method according to one of Claims 1 to 5, **characterised in that** the hollow cylinder formed by the foil sheet (2) is inserted with the core (1) into the tube-like sheath (6) and is joined thereto at least on the end side.

7. Method according to Claim 6, **characterised in that** the hollow cylinder formed by the foil sheet (2) with the core (1) is glued to the tube-like sheath (6) at least on the end side.

8. Method according to one of Claims 1 to 5, **characterised in that** the sheath (6) is extruded onto the hollow cylinder formed by the foil sheet (2) with the core (1).

9. Method according to one of Claims 1 to 5, **characterised in that** the hollow cylinder formed by the foil sheet (2) is enveloped with the core (1) by a layer of flexible material forming the sheath (6) of the gas generator and the two longitudinal edges of the layer are joined to one another.

10. Method according to Claim 9, **characterised in that** the two longitudinal edges of the layer forming the sheath (6) of the gas generator are joined to one another on the abutting sides.

11. Method according to Claim 9 or 10, **characterised in that** the longitudinal edges of the layer are glued to one another.

12. Gas generator with a tube-like sheath (6), a coating (3) composed of a solid ignition agent arranged on the inside thereof, at least one core (1) having a propellant charge and at least one continuous gas duct (8a, 8b, 8c, 8d) arranged between the sheath (6) and the core (1), **characterised by** a foil sheet (2) arranged on the inside on the sheath (6), the coating (3) composed of the particulate ignition agent being adherently applied to the side of said foil sheet facing the core (1).

13. Gas generator according to Claim 12, **characterised in that** the ignition agent is applied to the foil sheet (2) by means of an adhesive film.

14. Use of a gas generator produced using a method according to one of Claims 1 to 11 as a fuse.

15. Use of a gas generator produced using a method according to one of Claims 1 to 11 for airbags.

## Revendications

1. Procédé de fabrication d'un générateur de gaz en faisceau comportant une enveloppe tubulaire (6), un revêtement (3), disposé à l'intérieur, constitué d'un agent d'allumage solide, au moins un noyau (1) présentant un bloc de poudre et au moins une arrivée de gaz (8a, 8b, 8c, 8d) disposée entre l'enveloppe (6) et le noyau (1),
**caractérisé par**
les étapes suivantes :
- application adhésive de l'agent d'allumage particulaire sur une bande de film (2);
- enveloppement du noyau (1) avec la bande de film (2) recouverte de l'agent d'allumage particulaire en formant un cylindre creux, entourant le noyau (1) et formant les arrivées de gaz (8a, 8b, 8c, 8d) de telle façon que le côté de la bande de film (2), recouverte de l'agent d'allumage, forme le côté intérieur du cylindre creux tournée vers le noyau (1);
- assemblage des deux bords longitudinaux de la bande de film (2) pour former le cylindre creux fermé ;
- disposition du cylindre creux contenant le noyau (1), formé par la bande de film (2) avec l'agent d'allumage particulaire appliqué sur le côté intérieur, dans l'enveloppe (6).

2. Procédé selon la revendication 1,
**caractérisé en ce que**
la bande de film (2) est dotée d'une couche adhésive pour l'agent d'allumage avant l'application de l'agent d'allumage.

3. Procédé selon la revendication 1,
**caractérisé en ce qu'**
on utilise un film collant.

4. Procédé selon l'une quelconque des revendications 1 à 3,
**caractérisé en ce que**
le noyau (1) est enveloppé, au moyen d'un moule positif (4), par la bande de film (2) revêtue de l'agent d'allumage.

5. Procédé selon l'une quelconque des revendications 1 à 4,
**caractérisé en ce que**
les bords longitudinaux de la bande de film (2) sont collés ensemble.

6. Procédé selon l'une quelconque des revendications 1 à 5,
**caractérisé en ce que**
le cylindre creux, avec le noyau (1), formé par la bande de film (2), est introduit dans l'enveloppe tubulaire et est relié à celle-ci sur au moins les extrémités.

7. Procédé selon la revendication 6,
**caractérisé en ce que**
le cylindre creux, avec le noyau (1), formé par la bande de film (2), est collé avec l'enveloppe tubulaire (6) au moins sur les extrémités.

8. Procédé selon l'une quelconque des revendications 1 à 5,
**caractérisé en ce que**
l'enveloppe (6) est extrudée sur le cylindre creux avec le noyau (1) formé par la bande film (2).

9. Procédé selon l'une quelconque des revendications 1 à 5,
**caractérisé en ce que**
le cylindre creux, avec le noyau (1), formé par la bande de film (2), est enveloppé d'une couche de matière souple formant l'enveloppe (6) du générateur et les deux bords longitudinaux de la couche sont reliés ensemble.

10. Procédé selon la revendication 9,
**caractérisé en ce que**
les deux bords longitudinaux de la couche formant l'enveloppe (6) du générateur de gaz sont reliés ensemble bout à bout.

11. Procédé selon la revendication 9 ou 10,
**caractérisé en ce que**
les bords longitudinaux de la couche sont collés ensemble.

12. Générateur de gaz comportant une enveloppe tubulaire (6), un revêtement (3), disposé sur le côté intérieur de celle-ci, constitué d'un agent d'allumage solide, au moins d'un noyau (1) présentant un bloc de poudre et au moins d'une arrivée de gaz (8a, 8b, 8c, 8d) continue disposée entre l'enveloppe (6) et le noyau (1),
**caractérisé par**
une bande de film (2), disposée sur le côté intérieur contre l'enveloppe (6), sur le côté dirigé vers le noyau (1) de laquelle le revêtement (3), constitué de l'agent d'allumage particulaire, est appliqué de manière adhésive.

13. Générateur de gaz selon la revendication 12,
**caractérisé en ce que**
l'agent d'allumage est appliqué sur la bande de film (2) au moyen d'un film de colle.

14. Utilisation d'un générateur de gaz, fabriqué au moyen d'un procédé selon l'une quelconque des revendications 1 à 11, en tant que mèche.

15. Utilisation d'un générateur de gaz, fabriqué au moyen d'un procédé selon l'une quelconque des revendications 1 à 11, pour des airbags.
